# EUROPEAN PATENT SPECIFICATION

(11) **EP 3 891 046 B1**
(45) Date of publication and mention of the grant of the patent: **27.12.2023**
(21) Application number: 19816943.5
(22) Date of filing: 26.11.2019
(51) Int. Cl.: B62D 23/00, B62K 5/027, B62K 21/02, B62D 9/02, B62D 61/08, B62K 5/10

(54) **SELF-BALANCING TILTING VEHICLE WITH TILTING SPEED AND TILTING TORQUE CONTROLLER**
SELBSTAUSGLEICHENDES NEIGEFAHRZEUG MIT NEIGEGESCHWINDIGKEITS- UND NEIGEMOMENTSTEUERGERÄT
VÉHICULE INCLINABLE À AUTO-ÉQUILIBRAGE AVEC DISPOSITIF DE COMMANDE DE VITESSE D'INCLINAISON ET DE COUPLE D'INCLINAISON

(30) Priority: 03.12.2018 NL 2022121
(43) Date of publication of application: 13.10.2021
(73) Proprietor: Carver B.V., 3295 KV 's-Gravendeel (NL)
(72) Inventor: VAN DEN BRINK, Christopher Ralph, 3295 KV 's-Gravendeel (NL); KROONEN, Hendrik Marinus, 3333 CL Zwijndrecht (NL)
(74) Representative: Nederlandsch Octrooibureau
(86) International application number: PCT/NL2019/050782
(87) International publication number: WO 2020/117044

(56) References cited:
- WO-A1-2014/011821
- WO-A1-2018/180755

## Description

### Field of the invention

The invention relates to a tilting vehicle comprising a rear frame section having two drive wheels and a front frame section having at least one front wheel, connected to the rear frame section such as to be tiltable about a tilt axis (TA) that extends in a length direction, the front frame section carrying a driver seat, the rear frame section comprising a propulsion drive for rotating the drive wheels and a tilting drive for tilting the front frame section about the tilting axis, the front wheel being mounted on a front wheel support and being connected to a steering member so as to be tiltable about a steering axis that extends transversely to the tilt axis (TA), by operation of the steering member, the front wheel having a contact point with a road surface that is situated closer to the rear frame section than an intersection of the steering axis with the road surface. The invention also relates to a controller for use in such a tilting vehicle.

### Background art

Such a self-balancing tilting vehicle is known from WO95/34459, describing a vehicle in which the front wheel can freely pivot about a generally vertical front suspension axis. The steering wheel that is operated by the driver, is controlling two hydraulic cylinders that pivot the front frame section in which the driver is seated, about the longitudinal tilt axis. A sensor on the front wheel measures the force or torque that acts on the front wheel and interrupts the action of the tilting cylinders when this force or torque is below a pre-determined threshold value, for instance zero. If, at a certain speed, the driver turns the steering wheel to the right, this actuates the tilting cylinders and the front frame section will start to tilt away from the vertically upright position, to the right. The front wheel, that is freely suspended, experiences a torque and will start to tilt to about the front fork axis, causing the vehicle to move into a right curve. When the torque on the front wheel returns to zero, the tilting is interrupted, and the tilting position of the front frame part will be maintained at the right angle that matches with the velocity, the radius of the curve driven and the weight of the front frame part, including the driver.

In WO99/14099 a self-balancing tilting vehicle having a rotation sensor coupled to the front wheel is described. The rotation sensor measures the difference in rotation between the front wheel about its front fork axis and the rotation input obtained from the driver by turning the steering wheel and operates the tilting cylinders based on this difference signal. This results in improved handling and ease of driving.

In WO99/24308 a self-balancing tilting vehicle comprising an opposite lock power cylinder attached to the front steering wheel, so that the tilting section will easily fall into the bend, when the steering wheel is turned by the driver.

Tilting vehicles such as described in WO99/14099 and WO99/24308 are driven by a combustion engine and involve a relatively heavy hydraulic tilting mechanism. The control of these vehicles is restrictively suitable for higher speeds having relatively gentle bends.

### Summary of the invention'

It is an object of the present invention to provide a tilting vehicle that is of relatively light weight and small dimensions. It is a further object of the invention to provide a tilting vehicle that is safe and can be easily handled both in city traffic, at a higher comfort level and at higher speeds. Such a tilting vehicle is known from WO 2018/180755 A1.

It is a further object to provide a tilting vehicle that allows a versatile control of the tilting.

Hereto the tilting vehicle according to the invention further comprises a velocity sensor for measuring a driving speed V_{d} of the vehicle, a steering force sensor, connected to a front wheel and to the steering member, for sensing a moment or force Fₛ exerted by the front wheel and the steering member around the steering axis (SA), a tilting angle sensor for measuring the tilt angle αₜ of the front frame section relative to the rear frame section, and a controller, the controller receiving at an input the driving speed V_{d}, the steering force sensor signal Fₛ and the tilt angle signal and being with an output connected to the tilting drive. Whereby the controller is adapted to calculate, based on the measured values of V_{d}, Fₛ and αₜ:
- a set tilting velocity value Vt of the front frame section versus the rear section around the tilt axis (TA), and
- a set maximum tilting moment value Mt to be exerted by the tilting drive in the rear section on the front frame section,
and forming tilting drive signals Tdₛ and Tdt for actuating the tilting drive at the set tilting speed Vt and at the set tilting moment Mt.

When the vehicle is driven along a straight-line path, no force is exerted on the steering force sensor by the front wheel and by the driver. The front frame section is hence in the upright position. When the driver now turns the steering member into a curve, the front wheel will experience a turning force, but will be turned back to the straight-on direction by the positive caster of the front wheel. The driver experiences a resisting steering force Fₛ acting on the steering member and this resultant steering force Fₛ exerted by the driver is input into the controller, together with the tilt angle at of the front frame section and the driving speed V_{d}. In the controller, the steering force Fₛ at the driving speed V_{d} results in the generation of a tilting drive signal for controlling the tilting drive to a specific tilting velocity and tilting moment. The control signals to the tilting drive are further based on the feedback of the driving velocity and the tilt angle of the front frame section.

Based on the controller generated tilting drive signals Tdₛ and Tdt, a moment Mt is generated that will make the front frame section lean into the curve, at a programmed tilting velocity and torque. The force on the front wheel is reduced by the tilting of the front frame section. This lower force is measured by the steering force sensor Fₛ and is input into the controller, causing the controller to reduce the tilting speed and tilting moment, until the equilibrium tilt angle of the front frame section is reached, and the titling velocity has again returned to zero, at a low torque exerted by the tilting drive. The vehicle now drives into a bend with a pre-determined curve, in which the tilt angle of the front frame section matches the driving speed V_{d}, the radius of the curve and the weight of the front frame section, including that of the driver thus keeping the vehicle in balance.

The force that is required by the driver holding the steering member to keep the steering member in the curve, is now at minimum value and is determined by the positive caster of the front wheel. When the driver, while driving in a steady curve, releases its force on the steering member, this positive caster of the front wheel exerts a return moment on the front wheel opposite to the direction of the curve, turning the front wheel back about the front wheel steering axis. This steering force of opposite direction is measured by the steering force sensor, and a steering force signal of opposite sign is input into the controller and will cause the controller to set a tilt velocity in the direction of the upright position. When this upright position of the front frame section is reached, at zero tilt angle, the restoring moment on the front wheel about the steering axis caused by the positive caster, has again returned to a minimum value, and the tilt speed is brought again to 0 by the controller. The moment on the tilting drive is brought back to a low value keeping the front frame section upright in a flexible manner.

By a responsive control of the tilting velocity and the tilting moment of the tilting drive as a function of the tilting force and tilt angle, a safe, natural and easy handling of the tilting vehicle, especially at winding trajectories at low and moderate speeds, such as in city traffic at velocities under 50 km/h, is achieved.

The tilting drive may be hydraulic, electric or a combination of both. Preferably, the tilting drive is formed by an electromotor, which is of light weight, compact dimensions and can be easily controlled.

By setting and optimizing the parameters in look-up tables, thus giving the correct signals to the controls, as described above, the vehicle can be given the kinetic properties for an optimum dynamic behavior under all the circumstances as described below.

In an embodiment of a tilting vehicle according to the invention
- the set tilting velocity value Vt is formed by the sum of a force component Vt(Fs) at the observed force Fs, and a tilt angle component Vt(at) at the observed tilt angle αₜ: Vt= Vt(Fs)+ Vt(αₜ),
- the tilting moment value Mt is formed by the maximum value of a tilting moment value Mt(Fs) at the observed force Fs and the tilting moment value Mt(αₜ) at the observed tilt angle αₜ: Mt= MAX(Mt(Fs), Mt(αₜ) ), wherein Vt(Fs) and Vt(at) increase from a minimum value, preferably about 0, to a maximum value and have negative values for negative forces and angles, and wherein Mt(Fs), Mt(αₜ) increase from 0 to a maximum value and have positive values for all forces and angles.

When driving straight ahead, the tilting moment value Mt is at a low value when the steering force Fs is low. When driving straight ahead, the low moment generated by the tilting drive will result in an elastic connection of the front frame section and rear frame section and allows a large degree of independent movement of the frame sections about the tilt axis. When in case of driving straight on, with the front frame section in its upright position, and when the wheels of the rear frame section would drive over an uneven part of the road surface, for instance through a hole or over a stone or other object lying on the road surface, the rear frame section is allowed to rotate while the tilting drive is kept at a low torque and runs free from the front frame section. Consequently, the front frame section remains undisturbed in its upright position. This greatly improves driving comfort when driving straight on, and reduces the forces acting on the tilting drive caused by uneven road surfaces. Hence the tilting drive can be constructed in a light weight manner and has an increased service life.

When turning into a curve, the coupling between the front and rear frame sections about the tilting axis via the tilting drive becomes more rigid, and at high steering forces, the controller operates the tilting drive such that it exerts a high moment.

During maneuvering along a winding trajectory, the responsiveness of the tilting mechanism is increased by the increase in the tilting velocity value Vt at larger tilt angles αt. When the driver gives a sharp pull on the steering member when in the process of turning into a curve and being at a tilt angle αt larger than zero, this will result in a higher tilting velocity value Vt than when the steering wheel is pulled when in the upright position when the tilt angle αt is zero.

The tilting moment value Mt is controlled to be low at low steering forces Fs and small tilt angles αt and to increase at increasing steering forces and tilt angles. This results in optimization of the rigidity of the rotational coupling of the front and rear frame sections under varying driving conditions and provides safe, accurate and pleasant handling at all speeds along winding and along straight trajectories.

In an embodiment of a tilting vehicle according to the invention, the rear frame section comprises a position sensor for measuring an angle of the rear frame section relative to a horizontal plane, the controller placing the front frame section in an upright position when the position sensor measures an angle of the rear frame section that deviates from a horizontal position. When the vehicle drives straight on a sloping surface, for instance a sideways sloping road surface of a hill or the side of a dike, the front frame section is maintained in an upright position, up to an angle of the rear frame section of for instance 45°. The front frame section is also placed into the upright position when the one of the rear wheels is parked on the curb while the other rear wheel is resting in lower position on the road surface. By this the driver comfort is improved.

The controller may be configured such that the front frame section, at relatively low velocities and when the vehicle is stationary, is placed in an upright position for all steering forces. In this manner, tilting of the front frame section is prevented when the driver pulls at the steering member, when the vehicle is stationary. Also at lower speeds, preventing tilting may be advantageous, for instance when driving at very low speeds through dense city traffic or otherwise crowded and confined spaces.

In a preferred embodiment of a tilting vehicle according to the invention, the propulsion drive comprises an electric drive motor for each rear wheel, the controller being connected to the electric drive motors of the wheels and adapted to operate the electric motors at mutually different torques, speeds or rotational directions. In a further embodiment of a tilting vehicle according to the invention, the controller is adapted to, when steering into a curve with a velocity within a first predetermined velocity range, controls the rear wheels such that a moment is generated on the rear frame section about a substantially vertical axis VA in the direction of the curve.

By controlling the rear wheels to generate a moment on the rear frame section, a power steering function is obtained that is independent of the tilting moment of the front frame section and that provides a large degree of freedom of the manufacturer of the vehicle to determine its handling properties.

At low speeds, the rear wheels operate as a power steering, assisting the directional change by turning the vehicle into a curve, which is initiated by the driver turning the steering member. Without such power steering, the directional change of the vehicle would tend to lag behind the tilting moment and the assistance of the rear wheel improves the maneuverability of the vehicle. At higher speeds, the lag of the directional change following the tilting moment was found to lead to over steering into the curve by the driver, followed by compensation by steering back away from the curve, causing an oscillating movement of the front frame section. By providing a steering assist function of the rear wheels, these oscillating movements of the front frame section about the tilting axis in the mid-range of velocities was found to be effectively counteracted.

In again an embodiment, the controller is adapted to, when steering into a curve with a velocity within a second predetermined velocity range, control the rear wheels such that a moment is generated on the rear frame section about a substantially vertical axis VA that is opposite to the direction of the curve.

It was found that high speeds, the front wheel has a large gyroscopic effect that exerts a torque on the front wheel that pulls it around the steering axis into the curve. This result in a directional change ahead of the tilting of the front frame section and consequently a large torque being required to rapidly tilt the front frame section towards the desired tilt angle. The gyroscopic effect of the front wheel will also counteract intended tilting of the front frame section and stabilizes it in a position in which very large tilting torques need to be exerted to obtain any further tilting. This may cause the inner rear wheel to be lifted from the driving surface when turning into a curve at high speed. By counter rotation of the rear frame section, i.e. out of the curve, the directional change imposed by the driver is attenuated and the tilting motion of the front frame section can start prior to the directional change at a relatively low torque and reduced power, using a light tilting drive. Also, the moment tending to lift the inner rear wheel off the driving surface is reduced, and the track width of the rear wheel base can be reduced. By starting the tilting motion of the front frame section at a moment prior to the directional change, the tilting drive can operate at a higher speed, following which the speed of steering and directional change can be significantly increased, resulting in a faster overall response to the driver initiated steering action.

Such a tilting vehicle has improved safety during cornering by controlling the drive motor of the vehicle while cornering depending on the vehicle speed and the steering angle.

### Brief description of the drawings

Some embodiments of a tilting vehicle and its control system will, by way of non-limiting example, be described in detail with reference to the accompanying drawings. In the drawings:
Fig. 1 shows a perspective view of a tilting vehicle in a tilted state.
Fig. 2 shows a perspective view of structure of the tilting vehicle according to claim 1 without body panels and in an un-tilted state.
Fig. 3 shows a longitudinal cross-section of the tilting vehicle of Fig. 1.
Fig. 4 shows a top view of the tilting system components of the tilting vehicle of Fig. 1.
Fig. 5 Schematically shows the control circuit of the sensors, the controller and the motor drives,
Fig. 6 schematically shows the controller having four look-up tables,
Fig 6a illustrates how different speed and tilt torque settings restrict extreme tilt performances.
Fig. 7 schematically shows the graphs of the various parameter values in an example sequence
Fig. 8 schematically shows the graphs of the tilting angle vs vehicle speed at different curve radii,
Fig. 9 schematically shows the curves of the torques generated by the electric wheel hub motors
Fig.10 shows the tilt drive response at different speed- and torque settings.

### Detailed description of the invention

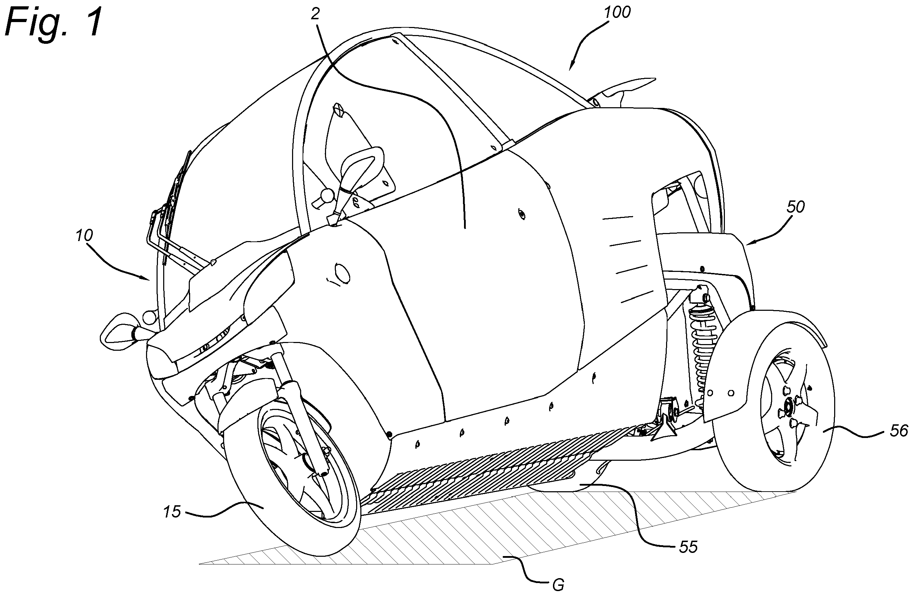

Fig. 1 shows a perspective view of a tilting vehicle 100 in a tilted position. The tilting vehicle 100 comprises a front frame section 10 with a front wheel 15 and body panels comprising a side panel 2 and a rear frame section 50 with two drive wheels 55,56. The front fame section 10 is connected to the rear frame section 50 in such a manner that the frame sections are tiltable with respect to each other. When a ground plane G onto which the tilting vehicle 100 is positioned is substantially flat, generally the front frame section will be tilting with respect to the rear frame section, offering a driving experience that combines the steering feel of a car and tilting sensation of driving a motorbike, when driving through bends.

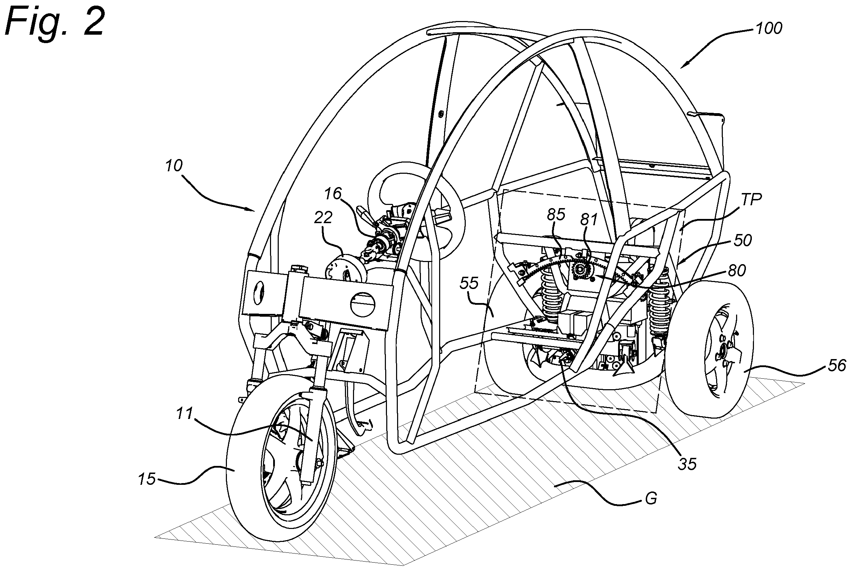

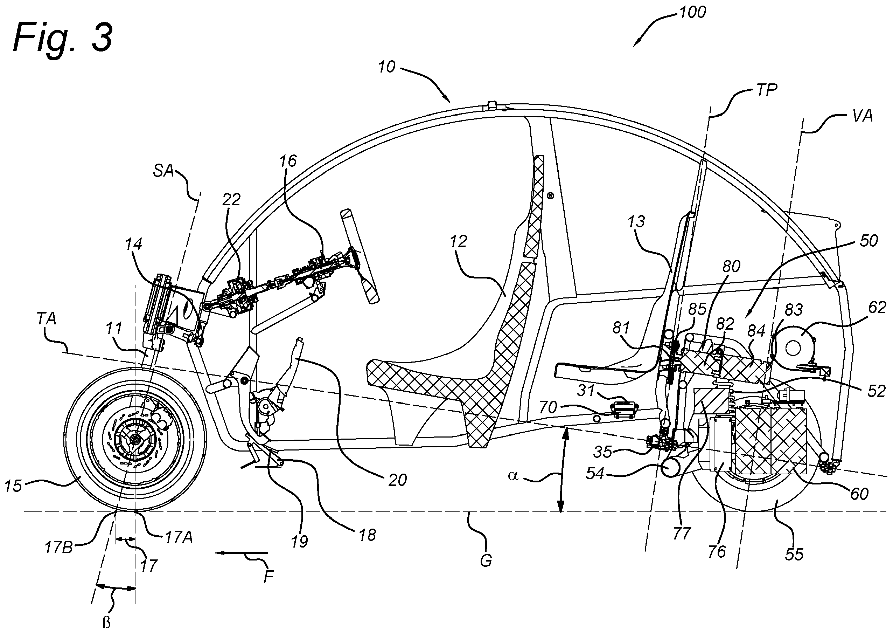

Fig. 2 shows a perspective view of structure of the tilting vehicle 100 according to claim 1 without body panels and in an upright position. The connection between the front and rear frame sections is shown to comprise a hinge 35 and a tilting mechanism, having a rack 85 and pinion drive 80 wherein the pinion 81 of the pinion drive is movable along a curved and toothed lower surface of the rack 85. The tilting mechanism allows controlled tilting of the front frame section with respect to the rear frame section along the entire toothed surface of the rack 85. As a result, the front frame 10 section is moveable between a first extreme tilted position in which the front frame section 10 is tilted around a longitudinal tilting axis TA (see Fig. 3) towards the side of first drive wheel 55 and a second extreme tilted position in which the front frame section 10 is tilted towards the side of the second drive wheel 56.

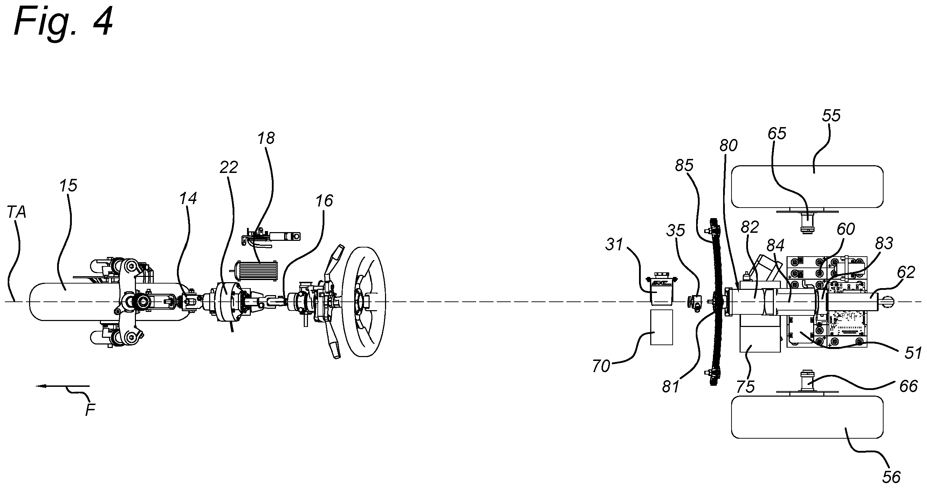

Figs. 3 and 4 respectively show a longitudinal cross-section and a top view of the tilting vehicle 100 of Fig. 1. Figs. 3 and 4 show the front frame section 10 with the one steering front wheel 15 further mounted on a front fork 11, a driver seat 12, a passenger seat 13, a steering member or handle bar 16, the curved tilting rack 85, a set of sensors 22, a front frame G-sensor and gyroscope 31 and a controller 70, as well as an acceleration pedal 18, a brake pedal 19 and a drive and reverse selection member 20, for selecting a driving direction of the vehicle. The listed components are set up in a regular driving arrangement, allowing a driver in the driver seat 12 to operate the acceleration pedal 18, brake pedal 19 , drive and reverse selection member 20 and handle bar 16, which are located within normal reaching distance in front of the driver seat. The passenger seat 13 is shown to be located directly behind the driver seat 12. This set-up allows the front frame section design to remain as narrow and sleek as possible, contributing to better aerodynamics and handling properties and reduces the vehicle's footprint. Alternatively, however, the seats may be positioned side by side, or only a driver seat 12 may be present.

The front wheel 15 is attached to the front frame section 10 via the front fork 11 which is rotatable about a steering axis SA located in the vertical plane, substantially perpendicular to the tilt axis TA. The front fork 11 is angled and constructed in such a way that, the axis reaches the ground at point 17B, which is located in front of the contact point 17A of the wheel with the ground. The caster angle β between the steering axis SA and a vertical axis through the contact point 17A of the wheel with the ground is about 7-8°. This results in a positive caster and generates a moment around the steering axis SA that will bring the front wheel 15 back to a straight-ahead equilibrium position. The trail 17, the distance along the ground surface G between the contact point 17A and the point 17B at which the steering axis SA reaches the ground, provides the degree of self-centring for the steering. Thus, by designing the front frame section such that the front fork 11 is at a caster angle β the vehicle is easier to control and has improved directional stability.

The front fork 11 is mechanically connected to the handle bar 16 through a linkage 14, allowing a driver of the vehicle to rotate the front wheel in a desired driving direction. This linkage 14 is constructed as a transmission with steering rods. Alternatively, the linkage can be a direct coupling, as for example the case of a conventional motor bicycle, or consist of control cables or an hydraulic or electrical actuator. Furthermore, it will be obvious that other steering means may be implemented in addition to or instead of the aforementioned options, in order to provide the vehicle with an auto-pilot function or to provide an autonomous vehicle using the same inventive concept. The sensors 22 are shown as being attached to the handle bar 16. The sensors 22 comprise a steering force sensor and a steering angle sensor, which are coupled to the steering shaft of the front wheel in such a way that the sensors register the steer force exerted by the driver via the handle bar 16 and the wheel caster, the sensors also measure the steering angle. The integrated steering angle and steering force sensor is a product available in the industry.

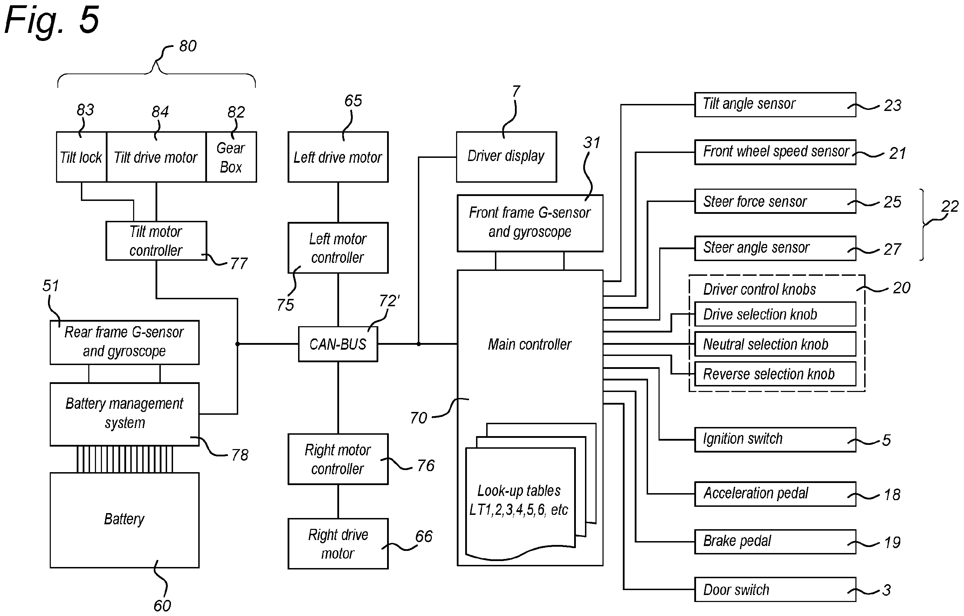

Additionally, a reversing sensor and a speed sensor are positioned in the front wheel 15 (not shown). The G-sensor and gyroscope 31 are positioned at the bottom of the tilting frame, near the controller 70. All measurements are transferred to a controller 70 located under the passenger seat 13 of the front frame section 10. The sensors are schematically shown in more detail in Fig. 5.

The rear frame section 50 comprising the drive wheels 55,56 is shown to further comprise a rear axle suspension body 54 for connecting the drive wheels to the rear frame section, and shock absorbers 52, as well as a main drive battery 60, a battery management system 78, a battery charger 62, electric drive motors 65, 66, the tilt drive 80 and a rear frame G-sensor and gyroscope 51. The shock absorbers 52 are connected between the rear frame and the rear axle suspension body 54 at the location where the drive wheels 55,56 are attached. The drive wheels are each equipped with independent electric hub motors 65, 66 with their controllers 75, 76, and independently connected to the battery 60 located in the rear frame section 50, via the battery management system 78, for electric power. Further, both hub motor controllers 75,76 are in communication with the controller 70 such that the drive wheels can be driven independently, allowing a difference in torque being generated between the drive wheel motors 65, 66 of the vehicle.ln this set-up the controller 70 is arranged to control the controllers 75,76 and electric motors 65,66 individually, allowing them to be run at different velocities, torques and/or directions from each other. Additionally, the controller 70 is arranged to redirect any regenerated electricity resulting from a braking action on one wheel to the other electric motor of the other wheel that is run at a higher speed or torque. This without the need for an extra heavy and expensive hydraulic cylinder, such as for instance in WO99/24308

The front frame section 10 is connected to the rear frame section 50 via a hinge 35 defining the rotation point around which the front frame section can be tilted. The distance between the hinge 35 and the pinion 81 defines the tilting moment arm. The tilting axis TA defines a longitudinal centerline of the tilting vehicle around which the wheels 15, 55, 56 are symmetrically spaced and which axis is at an angle α with respect to a ground plane G onto which all three wheels of the vehicle are resting such that the tilting axis is sloped downwards in the direction of the rear of the vehicle. The angle α of the tilting axis is about 7-8 degrees. The tilting rack 85 and tilt drive 80 are engaged at some distance above the hinge 35 seen in the tilting plane TP, for controlling the tilting motion of the front frame section 10 along the curvature of the tilting rack 85. Hereto the tilting drive 80 comprises the pinion 81, an electromotor 84, a gear box 82 and a tilt lock 83, which can be electrically disengaged.

The electromotor 84 of the tilting drive 80 is controlled by a motor controller mounted in the rear frame and is also connected to the battery 60 for electric power. In the vehicle 100 as depicted, the amperage and voltage to the electromotor 84 are controlled by the tilt motor controller as imposed by the main controller 70. Thus, the main controller 70 ultimately controls the activation of the tilting motion between the front frame section 10 and the rear frame section 50. The tilt lock 83 mechanically locks the tilting angle θ of the front frame section 10 with respect to the rear frame section 50 when the vehicle is in a parking position and no power is supplied.

When the electrical power is switched on, thus when the vehicle 100 is in use, the tilting drive 80 is mainly controlled depending on input provided to the main controller 70 by the sensors 22, the gyroscope and G-sensor 31 in the front frame section 10 and the gyroscope and G-sensor 51 in the rear frame section 50 in order to keep the vehicle upright. Upon switching on the vehicle, the tilt lock 83 is electrically disengaged so the front frame section 10 can tilt actively. If the rear frame section of the vehicle is not fully horizontal while no steering input is provided, the front frame section 10 of the vehicle 100 will be put in the upright position. When driving on an angled road surface or with one wheel on the curb, a measurement input to the main control 70 unit from the tilt angle sensor and/or the gyroscope and G-sensors 31,51 detects the inclined position of the rear frame section 50. The main controller 70 now causes the tilting drive 80 to rotate such that the vehicle comprises one or more tilting drive elements that tilts front frame section 10 upright. When a steering input is provided which results in the vehicle 100 tilting, the pinion 81 is operated at a high torque. The relation between the sensors, controller, battery and drive and tilt motors has been schematically indicated in Fig. 5

Fig.5 shows main the controller 70 receiving at its input steering force values Fs from steering force sensor 25, driving velocities Vd from front wheel speed sensor 21 and tilt angle values αt from tilt angle sensor 23. The tilt angle sensor 23 may be incorporated in the hinge connection 35 between the front frame section 10 and the rear frame section 50, as shown in Fig. 3. The main controller 70 is connected to the battery management system 78, to the tilt motor controller 77 and to the motor controllers 75, 76 of the respective drive motors 65 and 66 via the CAN bus. The steering angle αₛ is measured about the rotation axis Rs, by the steering angle sensor 27 of the integrated steering force and angle sensor assembly 22.

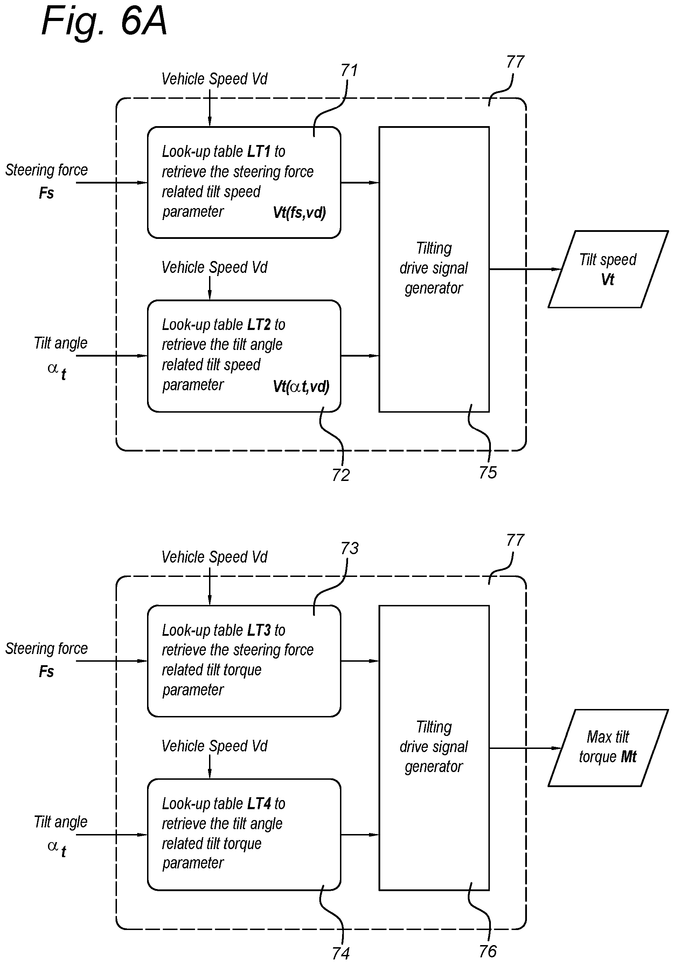

Fig 6a illustrates how different speed and tilt torque settings restrict extreme tilt performances. In the embodiment the power, that is supplied to the driving motors 66 and 65, is further controlled by limiting the throttle factor P as steering angle αₛ and the driving speed Vd values, that may come close to or exceed safe driving performance. The limits of this throttle factor P in this invention are defined by a function of the steering angle αₛ and the driving speed Vd: P = f (αₛ, Vd). Using the tilt angle as input instead of the steer angle will generate similar results. Also, a combination of both the steer- and tilt angle inputs refines safe driving performances further. These limiting throttle factor P values are shown in the graphic presentation in fig. 6a and are an illustration of the values listed in the look-up table LT6 in the main controller 70.
For instance, when the driver accelerates the vehicle by pressing down on the accelerator pedal 18 while giving a sharp turn αₛ on the steering member 16 the related maximum throttle value will limit the speed at which this action is performed.

The power supplied from the battery 60 to the rear wheel motors 66,65 is limited at higher steering angles αₛ and at higher driving speeds Vdh. The main controller 70 comprises the look up table LT6 with throttle factors specifying upon acceleration by the driver, which percentage of the power demand is supplied to each drive wheel, at different steering angles αₛ at different driving velocities Vd. The steering angle αₛ is measured about the rotation axis Rs, by the steering angle sensor 27 of the integrated steering force and angle sensor assembly 22.

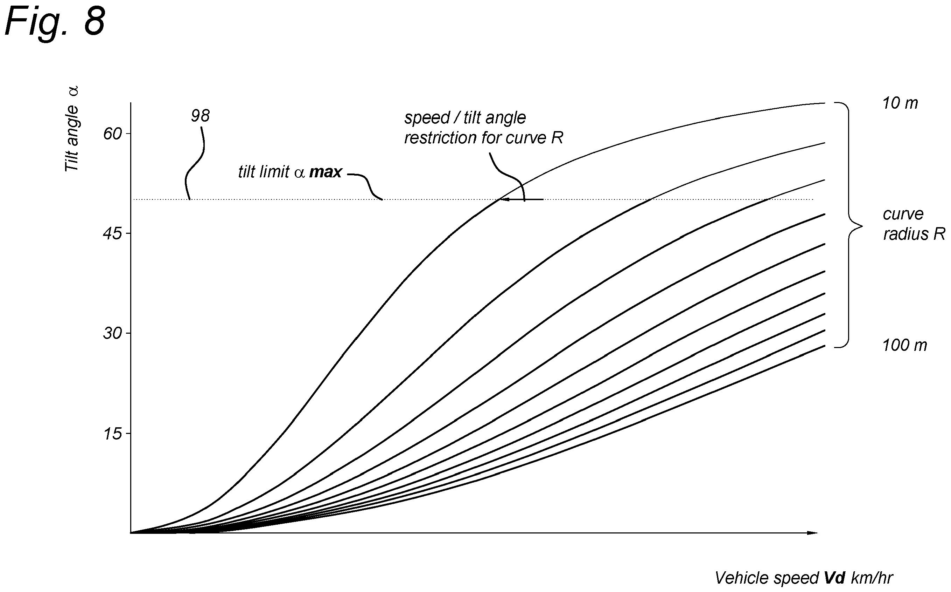

These control settings prevent that at low speeds, the vehicle is accelerated into an increasingly sharp bend and at high speeds, that at a steer angle αₛ the vehicle is prevented to accelerate to a speed, that exceeds the driving radius R and corresponding tilt angle of the front frame section as shown in fig. 8 ref. 98. Thus, irresponsible behavior of the driver is eliminated; hence safety is increased.

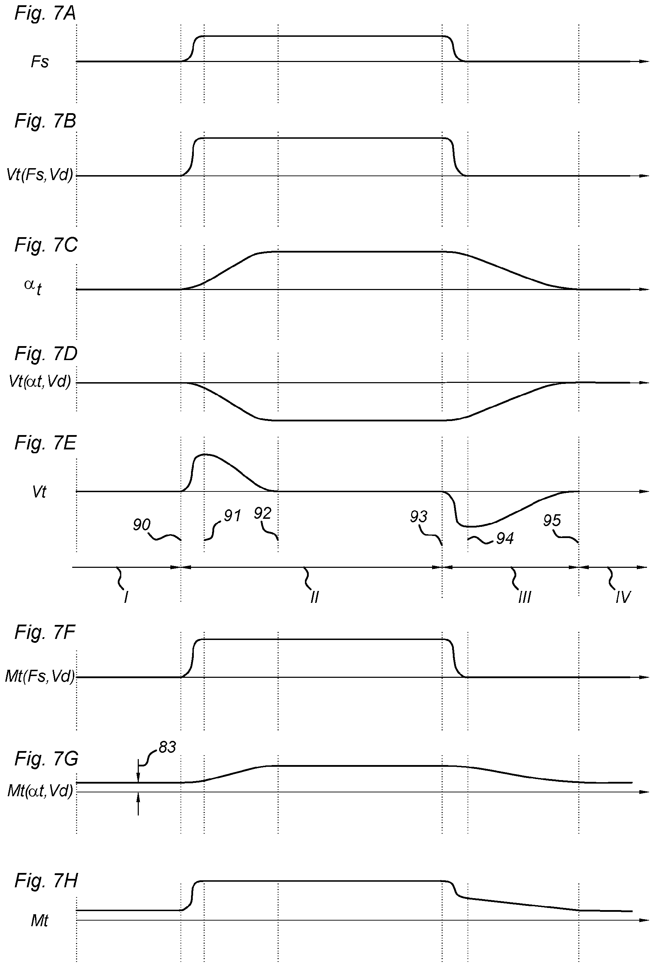

Fig. 7 shows the driving speed, tilting force and tilt angle signals Vd, Fs and αₜ , that are input into look-up tables 71,72,73 and 74 of the controllers 70. From the look up tables 71 and 72, a force component Vt(Fs) and a tilt angle component Vt(at) are retrieved at the corresponding driving velocity Vd. The force and tilt angle components are input to the signal generator 75 to result in set tilting velocity value Vt. The tilting velocity Vt corresponds to the set speed with which the front frame section is to be tilted by the tilt drive motor 80 and is input into the tilt motor controller 77.

From the look-up tables 73 and 74, the moments Mt(Fs) and Mt(αₜ) are retrieved, corresponding to the moment of the tilt drive motor 80 that is to be exerted on the front frame section 10. In the signal generator 76 the maximum value of Mt(Fs) and Mt(αₜ)) is determined and this maximum value is forwarded to the tilt motor controller 77.

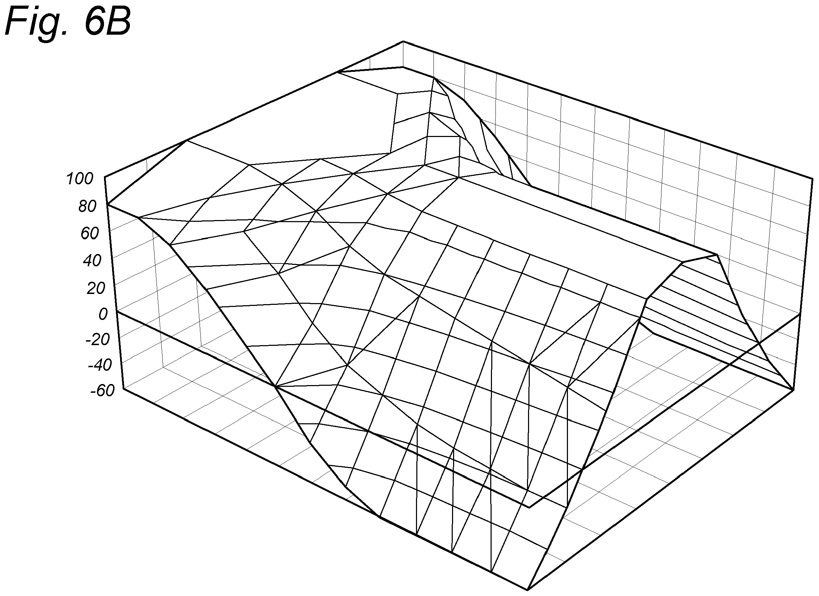

In the tilt motor controller 77, the tilting drive signal Td is formed corresponding to the polarity and the power with which the electric motor of tilting drive 80 is operated. The controller 70 is connected to the tilt motor controller 77 to provide the required preprogrammed, torques, speeds and angles in the tilting drive unit 80 at driving speeds and curves, as shown in the look-up tables in fig. 6

In Fig. 7 and 8 the basic workings of the invention are illustrated for the following example sequence. To this end the values and relationships of the parameters of the control system are shown in these graphic presentations for the cycles:
i. the vehicle is being driven in a straight up position on a straight line at a certain constant speed,
ii. the vehicle is subsequently tilted and turned at a certain tilting speed
iii. and subsequently kept in balance in a certain curve
iv. and finally returned to the straight line.
Fig. 7a shows a graphic presentation of the steer force Fs over time.
Fig. 7b shows a graphic presentation of the resulting tilt speed parameter Vt(Fs,Vd) related to the steer force Fs at the specific vehicle speed Vd
Fig. 7c shows the graphic presentation of the resulting tilt angle αₜ
Fig. 7d shows the graphic presentation of the resulting counter acting tilt speed parameter Vt(αₜ,Vd)
Fig. 7e shows the graphic presentation of the resulting tilt speed Vt = Vt(Fs,Vd) - Vt(αₜ,Vd)
Fig. 7f shows the graphic presentation of the related tilting torque Mt(Fs,Vd)
Fig. 7g shows the graphic presentation of the resulting tilting torque Mt(αₜ,Vd)
Fig. 7h shows the graphic presentation of the maximum tilting torque Mt = MAX (Mt(Fs,Vd) , Mt(αₜ,Vd) )

The steering force Fs is the turning force exerted on the steering force sensor 25 at the front wheel 15 and by the driver via the steering member 16. The tilting angle αₜ of the front frame section 10 about the tilting axis TA, is measured by the tilt angle sensor 23.
ii. When at a certain time 90 a steering force Fs is initiated by the driver or self-driving software as shown in fig. 7a the tilt speed parameter Vt(Fs,Vd) is increased as shown in fig. 7b to reach a value at time 78 related to the parameters of steering force Fs and vehicle speed Vd. Such parameters are retrieved from the look-up table LT1.
   Subsequently the tilt angle αₜ of the vehicle as shown in fig. 7c is increased to the required tilt angle by the tilt drive thereby initiated and controlled by the tilt speed factor Vt = Vt(Fs,Vd) + Vt(αₜ,Vd) whereby the parameter Vt(αₜ,Vd) ), as shown in Fig. 7d and which parameters are retrieved from the look-up table LT2, starts at 0 and becomes negative as the tilt angle αₜ grows, so reducing Vt as shown in fig. 7e.
   At the time 79 when the magnitude of Vt(αₜ,Vd) has reached Vt(Fs,Vd) the tilting speed Vt has become zero and the tilt angle has become constant the vehicle is fully balanced and drives on at the proper tilt value **αₜ** in a constant curve and speed, whereby its relation to such curve and speed is illustrated in fig.8.
iv. When at a certain time 80 the steering force Fs is reduced, as initiated by the driver or self-driving software as shown in fig. 7a, the tilt speed parameter Vt(Fs,Vd), as shown in fig. 7b is decreased to zero at time 81.
   Subsequently the tilt angle αₜ of the vehicle as shown in fig. 7c is decreased to zero by the tilt drive as controlled by the tilt speed factor Vt = Vt(Fs,Vd) - Vt(αₜ,Vd) whereby Vt(αₜ,Vd), as shown in Fig. 7d, diminishes as the tilt angle αₜ shrinks to 0, so reducing Vt to zero as shown in fig. 7e. At the time 82 when Vt(αₜ,Vd) has reached Vt(Fs,Vd), the tilting speed Vt and the tilt angle has become zero and the vehicle drives on in a straight up position on a straight line at a certain constant speed
   In fig. 7f, 7g and 7h is shown how simultaneously the tilting torque is controlled during this cycle.

As shown in fig. 7f tilt torque parameter values Mt(Fs,Vd) are related to the applied steering force and driving speed. They are largely proportionally to the steering force values and set at a maximum value. Such parameters are retrieved from the look-up table LT3

As shown in fig. 7g the tilt torque parameter values Mt(αₜ,Vd) has a value 83 that is a % fraction of the maximum parameter value Mt(Fs,Vd). To this value 83 increasing and decreasing parameter values are added in sequence and proportionally to Vt(αₜ,Vd). Such parameters are retrieved from the look-up table LT4.

In Fig. 7h the resulting maximum tilting torque Mt = MAX (Mt(Fs,Vd) , Mt(αₜ,Vd)) during this cycle is shown.

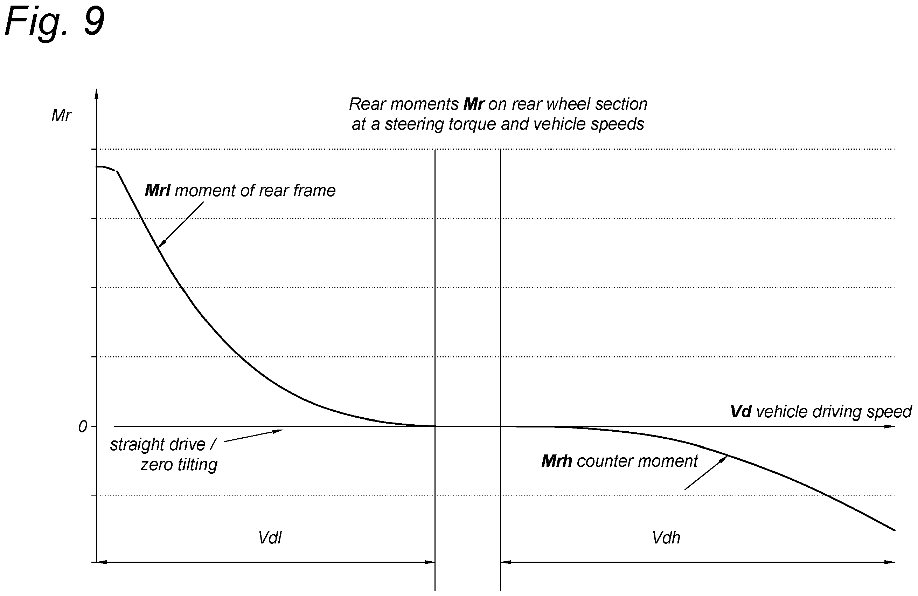

Fig. 9 schematically shows the curves of the torque generated by the electric wheel hub motors 65 and 66 of the rear frame section 50 as controlled by the main controller 70, via the CAN bus and the respective drive motor controllers 75 and 76. The rear wheel hub motors 66, 65 are controlled in such manner that they generate a moment Mr around a vertical axis, which assists the rear frame section 50 in turning into the curve or out of the curve initiated by the driver. The main controller 70 comprises a look up table LT5 with rear section torque values Mr(Fs), at different forces Fs measured by the steering force sensor 23 at different driving velocities Vd.

As has schematically been indicated in fig. 9, at low driving velocities Vdl, the rear wheel motors 66,65 are driven to generate an increasing moment Mr on the rear frame section 10 about a substantially vertical axis, assisting turning of the vehicle into the bend at lower speeds. At increasing velocities, this positive turning moment is reduced, and is reversed at higher speeds Vdh, to be directed opposite to the direction of the steering force Fs, i.e. out of the curve. In this way, upon receiving a driver input for turning into a curve at high speed, the vehicle briefly turns out of the curve so that the front frame section 10 can rapidly tilt into the curve at relatively low tilting torque Mt. By the tilting of front frame section of the vehicle, the force Fs is reduced and the moment Mr of the rear wheels decreases to a zero value, while the vehicle will now start the directional change imparted by the front wheel 15 and drives into the curve while the driver experiences only moderate forces on the steering member 16.

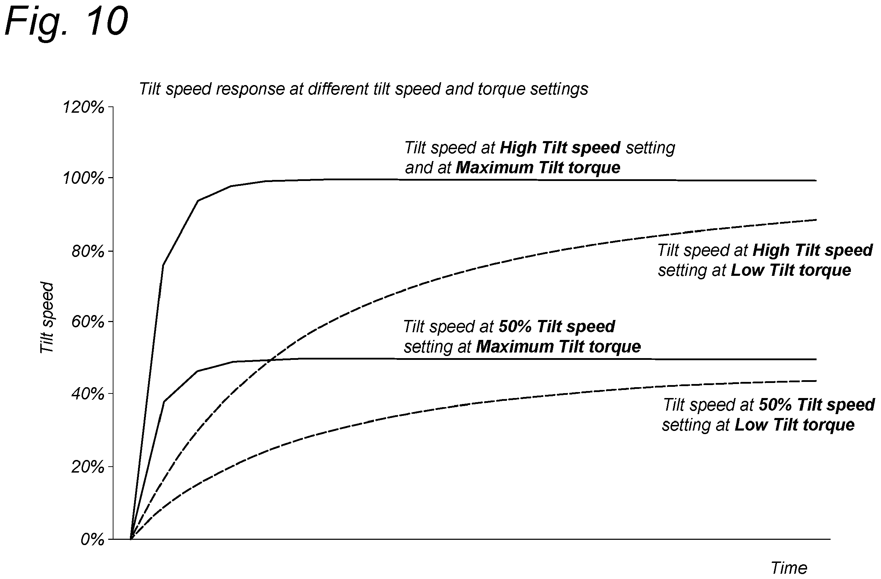

Fig.10 shows the tilt drive response at different speed- and torque settings. The combination of the Vt and Mt, at a given point in time, determines the power by which the vehicle is tilted at that point in time. The power required during the sequence ii is substantially reclaimed by the power generated by sequence iv.

## Claims

1. Tilting vehicle (100) comprising a rear frame section (50) having two drive wheels (55, 56) and a front frame section (10) having at least one front wheel (15), connected to the rear frame section (50) such as to be tiltable about a tilt axis (TA) that extends in a length direction, the front frame section (10) carrying a driver seat (12), the rear frame section (50) comprising a propulsion drive for rotating the drive wheels (55, 56) and a tilting drive (80) for tilting the front frame section about the tilting axis (TA), the front wheel (15) being mounted on a front wheel support and being connected to a steering member so as to be tiltable about a steering axis (SA) that extends transversely to the tilt axis (TA), by operation of the steering member, the front wheel having a contact point with a road surface that is situated closer to the rear frame section than an intersection of the steering axis with the road surface,
wherein the tilting vehicle (100) further comprises a velocity sensor (21) for measuring a driving speed V_{d} of the vehicle, a steering force sensor (25) connected to the front wheel and to the steering member for sensing a moment or force Fₛ exerted by the front wheel and the steering member around the steering axis (SA), a tilting angle sensor for measuring the tilt angle αₜ of the front frame section (10) relative to the rear frame section (50), and a controller (70), the controller (70) receiving at an input the driving speed V_{d}, the steering force sensor signal Fₛ and the tilt angle signal αₜ and being with an output connected to the tilting drive (80), the controller (70) being adapted to determine, based on the measured values of V_{d}, Fₛ and αₜ:
**characterized in that**
- a set tilting velocity value Vt of the front frame section (50) versus the rear section, around the tilt axis (TA)
- a set tilting moment value Mt to be exerted by the tilting drive (80) in the rear section on the front frame section (10),
and forming tilting drive signals Tds and Tdt for actuating the tilting drive (9) at the set tilting speed Vt and at the set tilting moment Mt.

2. Tilting vehicle according to claim 1, wherein the tilting drive (80) comprises an electric motor.

3. Tilting vehicle according to claim 1 or 2, wherein
- the set tilting velocity value Vt is formed by the sum of a force component Vt(Fs) at the observed force Fs, and a tilt angle component Vt(at) at the observed tilt angle αₜ: Vt= Vt(Fs)+ Vt(at),
- the tilting moment value Mt is formed by the maximum value of a tilting moment value Mt(Fs) at the observed force Fs and the tilting moment value Mt(αₜ) at the observed tilt angle αₜ: Mt= MAX(Mt(Fs), Mt(αₜ) ), wherein Vt(Fs) and Vt(at) increase from a minimum value, preferably about 0, to a maximum value and have negative values for negative forces and angles, and wherein Mt(Fs), Mt(αₜ) increase from 0 to a maximum value and have positive values for all forces and angles.

4. Tilting vehicle according to claim 1, 2 or 3, wherein, when driving along a straight path, the force Fs on the steering member (16) is substantially zero and the tilting moment value Mt is at a low value.

5. Tilting vehicle according to any of claims 1-4, wherein the rear frame section (50) comprises a position sensor (69) for measuring an angle of the rear frame section (50) relative to a horizontal plane, the controller (70) placing the front frame section (10) in an upright position when the position sensor (69) measures an angle of the rear frame section (50) that deviates from a horizontal position.

6. Tilting vehicle according to any of the preceding claims, wherein the controller (70) is adapted to place the front frame section (10), at relatively low driving velocities, in an upright position for all steering forces.

7. Tilting vehicle according to any of the preceding claims, wherein the propulsion drive comprises an electric drive motor (65,66) for each rear wheel (55,56), the controller (70) being connected to the electric drive motors (65,66) of the wheels (55, 56) and adapted to operate the electric motors at mutually different torques, speeds or rotational directions when the driving direction is a curve.

8. Tilting vehicle according to claim 7, wherein the controller (70) is adapted to, when steering into a curve with a velocity within a first predetermined velocity range, control the rear wheels (55,56) such that a moment is generated on the rear frame section (50) about a substantially vertical axis (VA) in the direction of the curve.

9. Tilting vehicle according to claim 7 or 8, the controller (70) being adapted to, when steering into a curve with a velocity within a second predetermined velocity range, control the rear wheels such that a moment is generated on the rear frame section (50) about a substantially vertical axis (VA) that is opposite to the direction of the curve.

10. Tilting vehicle according to any of the preceding claims, wherein the values of Vt(Fs), Vt(at), Mt(Fs) and Mt(αₜ) are provided for different speeds in look up tables (71,72,73,74) that are stored in a memory of the controller (70).

11. Tilting vehicle according to any of the preceding claims, comprising a steering angle sensor (27), for measuring rotation of the steering member (16) about a rotation axis Rs, the steering angle sensor (27) being connected to the controller (70), and an accelerator member (18) connected to the controller (70), for providing a driver acceleration command to the controller (70), wherein the controller (70) is connected to the propulsion drive (65,66) and is adapted and arranged for decreasing power supplied to the propulsion drive (65,66) in response to the acceleration command, at increasing steering angles αₛ, the decrease in power being larger for higher driving velocities Vd.

12. Controller (70) for use in tilting vehicle according to any of the preceding claims, wherein the tilting vehicle (100) further comprises a velocity sensor (21) for measuring a driving speed V_{d} of the vehicle, a steering force sensor (25) connected to the front wheel and to the steering member for sensing a moment or force Fₛ exerted by the front wheel and the steering member, a tilting angle sensor for measuring the tilt angle αₜ of the front frame section (10) relative to the rear frame section (50), the controller (70) being adapted to receive at an input the driving speed V_{d}, the steering force sensor signal Fₛ and the tilt angle signal αₜ and being with an output connectable to the tilting drive (80), the controller (70) being further adapted to determine, based on the measured values of V_{d}, Fₛ and αₜ:
- a set tilting velocity value Vt of the front frame section (50) around the tilt axis (TA), and
- a set tilting moment value Mt to be exerted by the tilting drive (80) on the front frame section (10),
and forming a tilting drive signal Td for actuating the tilting drive (9) at the set tilting speed Vt and at the set tilting moment Mt.

13. Controller (70) according to claim 13, comprising a memory in which the values of Vt(Fs), Vt(αₜ), Mt(Fs) and Mt(αₜ) are stored for different speeds.

14. Controller (70) for use in a vehicle according to claim 12, the controller (70) having an input for receiving the driving speed V_{d} and a steering angle sensor signal αₛ, and being with an output connectable to the propulsion drive, the controller (70) being adapted and arranged for decreasing power supplied to the propulsion drive in response to an acceleration command, at increasing steering angles αₛ, the decrease in power being larger for higher driving speeds Vd.

## Patentansprüche

1. Kippfahrzeug (100), das einen hinteren Rahmenabschnitt (50) mit zwei Antriebsrädern (55, 56) und einen vorderen Rahmenabschnitt (10) mit mindestens einem Vorderrad (15) umfasst, der mit dem hinteren Rahmenabschnitt (50) verbunden ist, um kippbar um eine Kippachse (TA) zu sein, die sich in eine Längsrichtung erstreckt, wobei der vordere Rahmenabschnitt (10) einen Fahrersitz (12) trägt, der hintere Rahmenabschnitt (50) einen Fahrantrieb zum Drehen der Antriebsräder (55, 56) und einen Kippantrieb (80) zum Kippen des vorderen Rahmenabschnitts um die Kippachse (TA) umfasst, wobei das Vorderrad (15) an einem Vorderradträger montiert ist und mit einem Lenkelement so verbunden ist, dass es durch Betätigung des Lenkelements kippbar um eine Lenkachse (SA) ist, die sich quer zu der Kippachse (TA) erstreckt, wobei das Vorderrad einen Kontaktpunkt mit einer Straßenoberfläche aufweist, der näher an dem hinteren Rahmenabschnitt als ein Schnittpunkt der Lenkachse mit der Straßenoberfläche liegt,
wobei das Kippfahrzeug (100) ferner einen Geschwindigkeitssensor (21) zum Messen einer Fahrgeschwindigkeit V_{d} des Fahrzeugs, einen Lenkkraftsensor (25), der mit dem Vorderrad und dem Lenkelement verbunden ist, zum Erfassen eines Moments oder einer Kraft Fₛ, die von dem Vorderrad und dem Lenkelement um die Lenkachse (SA) ausgeübt wird, einen Kippwinkelsensor zum Messen des Kippwinkels αₜ des vorderen Rahmenabschnitts (10) relativ zu dem hinteren Rahmenabschnitt (50) und eine Steuerung (70) umfasst, wobei die Steuerung (70) an einem Eingang die Fahrgeschwindigkeit V_{d}, das Lenkkraftsensorsignal Fₛ und das Kippwinkelsignal αₜ empfängt und einen Ausgang hat, der mit dem Kippantrieb (80) verbunden ist, wobei die Steuerung (70) geeignet ist, um basierend auf den gemessenen Werten von V_{d}, Fₛ und αₜ Folgendes zu bestimmen:
**gekennzeichnet dadurch, dass**
- einen eingestellten Kippgeschwindigkeitswert Vt des vorderen Rahmenabschnitts (50) gegenüber dem hinteren Abschnitt um die Kippachse (TA)
- einen eingestellten Kippmomentwert Mt, der von dem Kippantrieb (80) in dem hinteren Abschnitt auf den vorderen Rahmenabschnitt (10) ausgeübt werden soll,
und Kippantriebssignale Tds und Tdt zum Betätigen des Kippantriebs (9) mit der eingestellten Kippgeschwindigkeit Vt und dem eingestellten Kippmoment Mt bildet.

2. Kippfahrzeug nach Anspruch 1, wobei der Kippantrieb (80) einen Elektromotor umfasst.

3. Kippfahrzeug nach Anspruch 1 oder 2, wobei
- der eingestellte Kippgeschwindigkeitswert Vt durch die Summe einer Kraftkomponente Vt(Fs) bei der beobachteten Kraft Fs und einer Kippwinkelkomponente Vt(αₜ) bei dem beobachteten Kippwinkel αₜ: Vt= Vt(Fs)+ Vt(αₜ) gebildet wird,
- der Kippmomentwert Mt durch den Maximalwert eines Kippmomentwerts Mt(Fs) bei der beobachteten Kraft Fs und des Kippmomentwerts Mt(αₜ) bei dem beobachteten Kippwinkel αₜ: Mt= MAX(Mt(Fs), Mt(αₜ)) gebildet wird, wobei Vt(Fs) und Vt(αₜ) von einem Minimalwert, vorzugsweise etwa 0, auf einen Maximalwert ansteigen und negative Werte für negative Kräfte und Winkel aufweisen, und wobei Mt(Fs), Mt(αₜ) von 0 auf einen Maximalwert ansteigen und positive Werte für alle Kräfte und Winkel aufweisen.

4. Kippfahrzeug nach Anspruch 1, 2 oder 3, wobei beim Fahren auf einer geraden Strecke die Kraft Fs auf das Lenkelement (16) im Wesentlichen Null beträgt und der Kippmomentwert Mt einen niedrigen Wert aufweist.

5. Kippfahrzeug nach einem der Ansprüche 1-4, wobei der hintere Rahmenabschnitt (50) einen Lagesensor (69) zum Messen eines Winkels des hinteren Rahmenabschnitts (50) relativ zu einer horizontalen Ebene umfasst, wobei die Steuerung (70) den vorderen Rahmenabschnitt (10) in eine aufrechte Position bringt, wenn der Lagesensor (69) einen Winkel des hinteren Rahmenabschnitts (50) misst, der von einer horizontalen Position abweicht.

6. Kippfahrzeug nach einem der vorhergehenden Ansprüche, wobei die Steuerung (70) geeignet ist, um den vorderen Rahmenabschnitt (10) bei relativ niedrigen Fahrgeschwindigkeiten für alle Lenkkräfte in eine aufrechte Position zu bringen.

7. Kippfahrzeug nach einem der vorhergehenden Ansprüche, wobei der Fahrantrieb einen elektrischen Antriebsmotor (65,66) für jedes Hinterrad (55,56) umfasst, wobei die Steuerung (70) mit den elektrischen Antriebsmotoren (65,66) der Räder (55, 56) verbunden ist und geeignet ist, um die Elektromotoren mit voneinander unterschiedlichen Drehmomenten, Geschwindigkeiten oder Drehrichtungen zu betreiben, wenn die Fahrtrichtung eine Kurve ist.

8. Kippfahrzeug nach Anspruch 7, wobei die Steuerung (70) geeignet ist, um beim Einlenken in eine Kurve mit einer Geschwindigkeit innerhalb eines ersten vorbestimmten Geschwindigkeitsbereichs die Hinterräder (55,56) zu steuern, so dass ein Moment an dem hinteren Rahmenabschnitt (50) um eine im Wesentlichen vertikale Achse (VA) in Richtung der Kurve erzeugt wird.

9. Kippfahrzeug nach Anspruch 7 oder 8, wobei die Steuerung (70) geeignet ist, um beim Einlenken in eine Kurve mit einer Geschwindigkeit innerhalb eines zweiten vorbestimmten Geschwindigkeitsbereichs die Hinterräder zu steuern, so dass ein Moment an dem hinteren Rahmenabschnitt (50) um eine im Wesentlichen vertikale Achse (VA) erzeugt wird, die der Richtung der Kurve entgegengesetzt ist.

10. Kippfahrzeug nach einem der vorhergehenden Ansprüche, wobei die Werte von Vt(Fs), Vt(αₜ), Mt(Fs) und Mt(αₜ) für unterschiedliche Geschwindigkeiten in Nachschlagetabellen (71,72,73,74) bereitgestellt werden, die in einem Speicher der Steuerung (70) gespeichert sind.

11. Kippfahrzeug nach einem der vorhergehenden Ansprüche, das einen Lenkwinkelsensor (27) zum Messen der Drehung des Lenkelements (16) um eine Drehachse Rs umfasst, wobei der Lenkwinkelsensor (27) mit der Steuerung (70) verbunden ist und ein Beschleunigungselement (18) mit der Steuerung (70) verbunden ist, um der Steuerung (70) einen Fahrerbeschleunigungsbefehl bereitzustellen, wobei die Steuerung (70) mit dem Fahrantrieb (65,66) verbunden ist und geeignet und angeordnet ist, um die dem Fahrantrieb (65,66) zugeführte Leistung als Antwort auf den Beschleunigungsbefehl bei zunehmenden Lenkwinkeln αₛ zu verringern, wobei die Leistungsabnahme bei höheren Fahrgeschwindigkeiten Vd größer ist.

12. Steuerung (70) zur Verwendung in einem Kippfahrzeug nach einem der vorhergehenden Ansprüche, wobei das Kippfahrzeug (100) ferner einen Geschwindigkeitssensor (21) zum Messen einer Fahrgeschwindigkeit V_{d} des Fahrzeugs, einen Lenkkraftsensor (25), der mit dem Vorderrad und dem Lenkelement verbunden ist, um ein Moment oder eine Kraft Fₛ zu erfassen, die von dem Vorderrad und dem Lenkelement ausgeübt wird, und einen Kippwinkelsensor zum Messen des Kippwinkels αₜ des vorderen Rahmenabschnitts (10) relativ zu dem hinteren Rahmenabschnitt (50) umfasst,
wobei die Steuerung (70) geeignet ist, um an einem Eingang die Fahrgeschwindigkeit V_{d}, das Lenkkraftsensorsignal Fₛ und das Kippwinkelsignal αₜ zu empfangen und einen Ausgang hat, der mit dem Kippantrieb (80) verbunden werden kann, wobei die Steuerung (70) ferner geeignet ist, um basierend auf den gemessenen Werten von V_{d}, Fₛ und αₜ Folgendes zu bestimmen:
- einen eingestellten Kippgeschwindigkeitswert Vt des vorderen Rahmenabschnitts (50) um die Kippachse (TA), und
- einen eingestellten Kippmomentwert Mt, der von dem Kippantrieb (80) auf den vorderen Rahmenabschnitt (10) ausgeübt werden soll,
und ein Kippantriebssignal Td zum Betätigen des Kippantriebs (9) mit der eingestellten Kippgeschwindigkeit Vt und mit dem eingestellten Kippmoment Mt bildet.

13. Steuerung (70) nach Anspruch 13, die einen Speicher umfasst, in dem die Werte von Vt(Fs), Vt(αₜ), Mt(Fs) und Mt(αₜ) für verschiedene Geschwindigkeiten gespeichert sind.

14. Steuerung (70) zur Verwendung in einem Fahrzeug nach Anspruch 12, wobei die Steuerung (70) einen Eingang zum Empfangen der Fahrgeschwindigkeit V_{d} und ein Lenkwinkelsensorsignal αₛ aufweist und einen Ausgang hat, der mit dem Fahrantrieb verbunden werden kann, wobei die Steuerung (70) geeignet und angeordnet ist, um die dem Fahrantrieb zugeführte Leistung als Antwort auf einen Beschleunigungsbefehl bei zunehmenden Lenkwinkeln αₛ zu verringern, wobei die Leistungsabnahme bei höheren Fahrgeschwindigkeiten Vd größer ist.

## Revendications

1. Véhicule inclinable (100) comprenant une section de châssis arrière (50) ayant deux roues motrices (55, 56) et une section de châssis avant (10) ayant au moins une roue avant (15), connectée à la section de châssis arrière (50) de manière à être inclinable autour d'un axe d'inclinaison (TA) qui s'étend dans une direction de longueur, la section de châssis avant (10) portant un siège conducteur (12), la section de châssis arrière (50) comprenant un entraînement de propulsion pour la rotation des roues motrices (55, 56) et un entraînement d'inclinaison (80) pour incliner la section de châssis avant autour de l'axe d'inclinaison (TA), la roue avant (15) étant montée sur un support de roue avant et étant connectée à un élément de braquage afin d'être inclinable autour d'un axe de braquage (SA) qui s'étend transversalement à l'axe d'inclinaison (TA), par actionnement de l'élément de braquage, la roue avant ayant un point de contact avec une surface de la route qui est située plus près de la section de châssis arrière qu'une intersection de l'axe de braquage avec la surface de la route,
où le véhicule inclinable (100) comprend en outre un capteur de vitesse (21) pour mesurer une vitesse de conduite V_{d} du véhicule, un capteur de force de braquage (25) connecté à la roue avant et à l'élément de braquage pour détecter un moment ou force Fₛ exercée par la roue avant et l'élément de braquage autour de l'axe de braquage (SA), un capteur d'angle d'inclinaison pour mesurer l'angle d'inclinaison at de la section de châssis avant (10) par rapport à la section de châssis arrière (50), et un contrôleur (70), le contrôleur (70) recevant à une entrée la vitesse de conduite V_{d}, le signal de capteur de force de braquage Fₛ et le signal d'angle d'inclinaison at et étant avec une sortie connectée à l'entraînement d'inclinaison (80), le contrôleur (70) étant adapté pour déterminer, sur la base des valeurs mesurées de V_{d}, Fₛ et αₜ :
**caractérisé en ce que**
- une valeur réglée de vitesse d'inclinaison Vt de la section de châssis avant (50) par rapport à la section arrière, autour de l'axe d'inclinaison (TA)
- une valeur réglée de moment d'inclinaison Mt à exercer par l'entraînement d'inclinaison (80) dans la section arrière sur la section de châssis avant (10),
et formant des signaux d'entraînement d'inclinaison Tds et Tdt pour actionner l'entraînement d'inclinaison (9) à la vitesse réglée d'inclinaison Vt et au moment réglé d'inclinaison Mt.

2. Véhicule inclinable selon la revendication 1, où l'entraînement d'inclinaison (80) comprend un moteur électrique.

3. Véhicule inclinable selon la revendication 1 ou 2, où
- la valeur régée de vitesse d'inclinaison Vt est formée par la somme d'une composante de force Vt(Fs) à la force observée Fs, et d'une composante d'angle d'inclinaison Vt(αₜ) à l'angle d'inclinaison observé αₜ: Vt= Vt(Fs)+ Vt(αₜ),
- la valeur du moment d'inclinaison Mt est formée par la valeur maximale d'une valeur de moment d'inclinaison Mt(Fs) à la force observée Fs et la valeur de moment d'inclinaison Mt(αₜ) à l'angle observé d'inclinaison αₜ: Mt= MAX(Mt(Fs), Mt(αₜ) ), où Vt(Fs) et Vt(αₜ) augmentent d'une valeur minimale, de préférence environ 0, à une valeur maximale et ont des valeurs négatives pour des forces et angles négatifs, et où Mt(Fs), Mt(αₜ) augmentent de 0 à une valeur maximale et ont des valeurs positives pour toutes les forces et les angles.

4. Véhicule inclinable selon la revendication 1, 2 ou 3, où, lorsque conduisant le long d'une trajectoire rectiligne, la force Fs sur l'élément de braquage (16) est sensiblement nulle et la valeur du moment d'inclinaison Mt est à une valeur faible.

5. Véhicule inclinable selon l'une quelconque des revendications 1 à 4, où la section de châssis arrière (50) comprend un capteur de position (69) pour mesurer un angle de la section de châssis arrière (50) par rapport à un plan horizontal, le contrôleur (70) plaçant la section de châssis avant (10) dans une position verticale lorsque le capteur de position (69) mesure un angle de la section de châssis arrière (50) qui dévie d'une position horizontale.

6. Véhicule inclinable selon l'une quelconque des revendications précédentes, où le contrôleur (70) est adapté pour placer la section de châssis avant (10), à des vitesses d'entraînement relativement faibles, dans une position verticale pour toutes les forces de braquage.

7. Véhicule inclinable selon l'une quelconque des revendications précédentes, où l'entraînement de propulsion comprend un moteur d'entraînement électrique (65,66) pour chaque roue arrière (55,56), le contrôleur (70) étant connecté aux moteurs d'entraînement électriques (65,66) des roues (55, 56) et adapté pour faire fonctionner les moteurs électriques à des couples, vitesses ou directions de rotation mutuellement différents lorsque la direction de conduite est une courbe.

8. Véhicule inclinable selon la revendication 7, où le contrôleur (70) est adapté pour, lorsqu'en prenant une courbe avec une vitesse comprise dans une première plage de vitesses prédéterminée, commander les roues arrière (55,56) de sorte qu'un moment est généré sur la section de châssis arrière (50) autour d'un axe sensiblement vertical (VA) dans la direction de la courbe.

9. Véhicule inclinable selon la revendication 7 ou 8, le contrôleur (70) étant adapté pour, lorsqu'en prenant une courbe avec une vitesse comprise dans une deuxième plage de vitesses prédéterminées, commander les roues arrière de sorte qu'un moment est généré sur la section de châssis arrière (50) autour d'un axe sensiblement vertical (VA) qui est opposé à la direction de la courbe.

10. Véhicule inclinable selon l'une quelconque des revendications précédentes, où les valeurs de Vt(Fs), Vt(αₜ), Mt(Fs) et Mt(αₜ) sont fournies pour différentes vitesses dans des tables de consultation (71,72,73,74) qui sont stockées dans une mémoire du contrôleur (70).

11. Véhicule inclinable selon l'une quelconque des revendications précédentes, comprenant un capteur d'angle de braquage (27), pour mesurer la rotation de l'élément de braquage (16) autour d'un axe de rotation Rs, le capteur d'angle de braquage (27) étant connecté au contrôleur (70), et un élément accélérateur (18) connecté au contrôleur (70), pour fournir une commande d'accélération du conducteur au contrôleur (70), où le contrôleur (70) est connecté à l'entraînement de propulsion (65,66) et est adapté et disposé pour diminuer la puissance fournie à l'entraînement de propulsion (65,66) en réponse à la commande d'accélération, à des angles de braquage croissants αₛ, la diminution de puissance étant plus importante pour des vitesses de conduite plus élevées Vd.

12. Contrôleur (70) pour l'utilisation dans un véhicule inclinable selon l'une quelconque des revendications précédentes, où le véhicule inclinable (100) comprend en outre un capteur de vitesse (21) pour mesurer une vitesse de conduite V_{d} du véhicule, un capteur de force de braquage (25) connecté à la roue avant et à l'élément de braquage pour détecter un moment ou une force Fₛ exercé par la roue avant et l'élément de braquage, un capteur d'angle d'inclinaison pour mesurer l'angle d'inclinaison αₜ de la section de châssis avant (10) par rapport à la section de châssis arrière (50),
le contrôleur (70) étant adapté pour recevoir à une entrée la vitesse de conduite V_{d}, le signal de capteur de force de braquage Fₛ et le signal d'angle d'inclinaison αₜ et étant avec une sortie connectable à l'entraînement d'inclinaison (80), le contrôleur (70) étant en outre adapté pour déterminer, sur la base des valeurs mesurées de V_{d}, Fₛ et αₜ :
- une valeur réglée de vitesse d'inclinaison Vt de la section de châssis avant (50) autour de l'axe d'inclinaison (TA), et
- une valeur réglée de moment d'inclinaison Mt à exercer par l'entraînement d'inclinaison (80) sur la section de châssis avant (10),
et formant un signal d'entraînement d'inclinaison Td pour actionner l'entraînement d'inclinaison (9) à la vitesse réglée d'inclinaison Vt et au moment réglé d'inclinaison Mt.

13. Contrôleur (70) selon la revendication 13, comprenant une mémoire dans laquelle les valeurs de Vt(Fs), Vt(αₜ), Mt(Fs) et Mt(αₜ) sont stockées pour différentes vitesses.

14. Contrôleur (70) pour utilisation dans un véhicule selon la revendication 12, le contrôleur (70) ayant une entrée pour recevoir la vitesse de conduite V_{d} et un signal de capteur d'angle de braquage αₛ, et étant avec une sortie connectable à l'entraînement de propulsion, le contrôleur (70) étant adapté et disposé pour diminuer la puissance fournie à l'entraînement de propulsion en réponse à une commande d'accélération, à des angles de braquage croissants αₛ, la diminution de puissance étant plus importante pour des vitesses de conduite plus élevées Vd.
